(19) **Europäisches Patentamt**
**European Patent Office**
**Office européen des brevets**

(11) **EP 2 604 113 A1**

(12) **EUROPEAN PATENT APPLICATION**
published in accordance with Art. 153(4) EPC

(43) Date of publication:
**19.06.2013 Bulletin 2013/25**

(21) Application number: **11816445.8**

(22) Date of filing: **03.08.2011**

(51) Int Cl.:
*A01N 43/40* (2006.01)    *A01N 37/50* (2006.01)
*A01N 43/54* (2006.01)    *A01N 43/707* (2006.01)
*A01N 43/80* (2006.01)    *A01N 43/828* (2006.01)
*A01N 43/90* (2006.01)    *A01N 47/02* (2006.01)
*A01N 47/34* (2006.01)    *A01N 51/00* (2006.01)
*A01P 7/00* (2006.01)

(86) International application number:
**PCT/JP2011/068209**

(87) International publication number:
**WO 2012/020781 (16.02.2012 Gazette 2012/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2010 JP 2010180016**

(71) Applicant: **Sumitomo Chemical Company, Limited
Tokyo 104-8260 (JP)**

(72) Inventors:
• **SAKAMOTO, Norihisa
Kasai-shi
Hyogo 675-2333 (JP)**
• **SAKAMOTO, Emiko
Takarazuka-shi
Hyogo 665-8555 (JP)**

(74) Representative: **Vossius & Partner
Siebertstrasse 4
81675 München (DE)**

(54) **COMPOSITION FOR CONTROLLING HARMFUL ARTHROPODS AND METHOD FOR CONTROLLING HARMFUL ARTHROPODS**

(57)     A harmful arthropod control composition comprising flonicamid, one or more Delphacidae control compounds selected from Group (A), and one or more rice blast disease control compounds selected from Group (B) :
Group (A): a group consisting of clothianidin, imidacloprid, dinotefuran, thiamethoxam, fipronil and pymetrozine.
Group (B): a group consisting of isotianil, probenazole, tiadinil, tricyclazole, pyroquilone, thiophanate-methyl, orysastrobin and azoxystrobin.

**EP 2 604 113 A1**

**Description**

Technical Field

The present invention relates to a harmful arthropod control composition and a method for controlling a harmful arthropod.

Background Art

Heretofore, various compounds are known as active ingredients in harmful arthropod control compositions (see, for example, The Pesticide Manual-15th edition (published by BCPC); ISBN 978-1-901396-18-8).

Disclosure of Invention

The present invention includes the following [1] to [5]:

[1] A harmful arthropod control composition comprising flonicamid, one or more Delphacidae control compounds selected from Group (A), and one or more rice blast disease control compounds selected from Group (B):

Group (A): a group consisting of clothianidin, imidacloprid, dinotefuran, thiamethoxam, fipronil and pymetrozine.
Group (B): a group consisting of isotianil, probenazole, tiadinil, tricyclazole, pyroquilone, thiophanate-methyl, orysastrobin and azoxystrobin.

[2] The harmful arthropod control composition according to the above [1], wherein the weight ratio of flonicamid to the Delphacidae control compound is from 100:1 to 1:100.
[3] The harmful arthropod control composition according to the above [2], wherein the weight ratio of flonicamid to the rice blast disease control compound is from 10:1 to 1:100.
[4] A method for controlling a harmful arthropod, which comprises applying an effective amount of the harmful arthropod control composition according to any one of the above [1] to [3] to a plant or an area in which a plant is grown.
[5] The method for controlling a harmful arthropod according to the above [4], wherein the plant or the area in which a plant is grown is rice or an area in which rice is grown.

Mode for Carrying out the Invention

The harmful arthropod control composition of the present invention comprises flonicamid, one or more Delphacidae control compounds selected from the following Group (A) (hereinafter sometimes referred to as "the present Delphacidae control compound"), and one or more rice blast disease control compounds selected from the following Group (B) (hereinafter sometimes referred to as "the present rice blast disease control compound").

Group (A) : a group consisting of clothianidin, imidacloprid, dinotefuran, thiamethoxam, fipronil and pymetrozine.
Group (B): a group consisting of isotianil, probenazole, tiadinil, tricyclazole, pyroquilone, thiophanate-methyl, orysastrobin and azoxystrobin.

Typical Examples of the present Delphacidae control compound include clothianidin, imidacloprid, dinotefuran, thiamethoxam and fipronil.
Typical Examples of the present rice blast disease control compound include isotianil, probenazole, tiadinil, tricyclazole, pyroquilone, orysastrobin and azoxystrobin.
Typical Examples of the harmful arthropod control composition of the present invention include a composition comprising flonicamid, clothianidin and isotianil; a composition comprising flonicamid, thiamethoxam and pyroquilone; a composition comprising flonicamid, imidacloprid and rice blast disease control compound(s) selected from a group consisting of isotianil, tricyclazole, probenazole and tiadinil; a composition comprising flonicamid, fipronil, and rice blast disease control compound(s) selected from orysastrobin and probenazole; and a composition comprising flonicamid, dinotefuran, and rice blast disease control compound(s) selected from probenazole, orysastrobin, tiadinil and azoxystrobin.
Flonicamid is a known compound and can be obtained, for example, by a method described in JP 2994182 B.
All of clothianidin, imidacloprid, dinotefuran, thiamethoxam, fipronil, pymetrozine, probenazole, tiadinil, tricyclazole, pyroquilone, thiophanate-methyl, orysastrobin and azoxystrobin are known compounds, and described, for example, at pages 229, 645, 391, 1112, 500, 968, 927, 1134, 1163, 999, 1128, 840 and 62 of "The Pesticide Manual-15th edition (published by BCPC); ISBN 978-1-901396-18-8". These compounds can be obtained from commercial sources or produced by known methods.

Isotianil is a known compound and can be obtained, for example, by a method described in WO 99/024413.

In the harmful arthropod control composition of the present invention, the weight ratio of flonicamid to the present Delphacidae control compound (= flonicamid:Delphacidae control compound) is generally from 1000:1 to 1:1000, preferebly from 100:1 to 1:100, more preferably from 20:1 to 1:20.

In the harmful arthropod control composition of the present invention, the weight ratio of flonicamid to the present rice blast disease control compound (= flonicamid:rice blast disease control compound) is generally from 100:1 to 1:1000, preferebly from 10:1 to 1:100, more preferably from 10:1 to 1:50.

In the harmful arthropod control composition of the present invention, the weight ratio of flonicamid, the present Delphacidae control compound and the present rice blast disease control compound is not particularly limited. However, the present Delphacidae control compound is generally from 0.1 to 100000 parts by weight, preferably from 1 to 10000 parts by weight, and the present rice blast disease control compound is generally from 1 to 100000 parts by weight, preferebly from 10 to 10000 parts by weight, relative to 100 parts by weight of flonicamid.

The harmful arthropod control composition of the present invention may be prepared by simply mixing flonicamid, the present Delphacidae control compound, and the present rice blast disease control compound, or by mixing flonicamid, the present Delphacidae control compound and the present rice blast disease control compound and an inert carrier, and if necessary, a surfactant and/or other formulation additives, and then formulating the mixture into a formulation such as an oil solution, an emulsifiable concentrate, a suspension concentrate, a wettable powder, a water dispersible granule, a dust, or a granule.

Thus formulated harmful arthropod control composition may be used directly, or after the addition of other inert ingredients such as water, sand and vegetable oil, as a harmful arthropod control agent.

The total amount of flonicamid, the present Delphacidae control compound and the present rice blast disease control compound in the harmful arthropod control composition of the presen invention is generally from 0.01 to 99% by weight, preferebly from 0.1 to 90% by weight, more preferably from 0.5 to 70% by weight.

Examples of the inert carrier include solid carriers and liquid carriers.

Examples of the solid carrier to be used for formulation of the harmful arthropod control composition include fine powders or granules of minerals (e.g., kaolin clay, attapulgite clay, bentonite, montmorillonite, acidic white clay, pyrophylite, talc, diatomaceous earth, and calicite), natural organic substances (e.g., corncob flour, and walnut shell flour), synthetic organic substances (e.g., urea), salts (e.g., calcium carbonate, and ammonium sulfate), and synthetic inorganic substances (e.g., synthetic hydrated silicon oxide).

Examples of the liquid carrier include aromatic hydrocarbons (e.g., xylene, alkylbenzene, and methyl naphthalene), alcohols (e.g., 2-propanol, ethylene glycol, propylene glycol, and ethylene glycol monoethyl ether), ketones (e.g., acetone, cyclohexanone, and isophorone), vegetable oils (e.g., soybean oil, and cotton oil), petroleum-based aliphatic hydrocarbons, esters, dimethylsulfoxide, acetonitrile, and water.

Examples of the surfactant include anionic surfactants (e.g., alkyl sulfate ester salts, alkylaryl sulfonates, dialkyl sulfosuccinates, polyoxyethylene alkylaryl ether phosphate ester salts, ligninsulfonates, and naphthalene sulfonate formaldehyde polycondensates), nonionic surfactants (e.g., polyoxyethylene alkylaryl ethers, polyoxyethylene alkylpolyoxypropylene block copolymers, and sorbitan fatty acid esters), and cationic surfactants (e.g., alkyl trimethyl ammonium salts).

Examples of the other formulation additive include water-soluble polymers (e.g., polyvinyl alcohol, and polyvinyl pyrrolidone), polysaccharides [e.g., gum arabic, alginic acid and salts thereof, CMC (carboxymethyl cellulose), and xanthane gum], inorganic substances (e.g., aluminum magnesium silicate, and alumina-sol), preservatives, colorants, and stabilizers [e.g. isopropyl acid phosphate (PAP), and BHT].

The harmful arthropod control composition of the present invention can be used for protecting plants from damage due to eating or sucking by harmful arthropods such as harmful insects and harmful ticks.

Examples of the harmful arthropod on which the harmful arthropod control composition of the present invention has a controlling effect include as described below:

Hemiptera:

Delphacidae such as *Laodelphax striatellus, Nilaparvata lugens,* and *Sogatella furcifera;* Deltocephalidae such as *Nephotettix cincticeps, Nephotettix virescens,* and *Empoasca onukii;* Aphididae such as *Aphis gassypii, Myzus persicae, Brevicoryne* brassicae, Aphis *spiraecola, Macrosiphum euphorbiae, Aulacorthum solani, Rhopalosiphum padi, Toxoptera* citricidus, *Hyalopterus pruni,* and *Eriosoma lanigerum;* Pentatomidae such as *Nezara* antennata, *Trigonotylus caelestialium, Graphosoma rubrolineatum, Eysarcoris lewisi, Riptortus clavetus, Leptocorisa chinensis, Eysarcoris parvus, Halyoihorpha mista, Nezara viridula,* and *Lygus lineolaris;* Aleyrodidae such as *Trialeurodes vaporariorum, Bemisia tabaci, Dialeurodes citri,* and *Aleurocanthus spiniferus;* Coccoidea such as *Aonidiella aurantii, Comstockaspis perniciosa, Unaspis citri, Ceroplastes rubens, Icerya purchasi, Planococcus kraunhiae, Pseudococcus longispinis,* and *Pseudaulacaspis pentagona;* Tingidae; Cimicoidea *such as Cimex lectularius;* Psyllidae such as *Cacopsylla pyricola;* etc.

Lepidoptera:

Pyralidae such as *Chilo suppressalis, Tryporyza incertulas, Cnaphalocrocis medinalis, Notarcha derogata, Plodia interpunctella, Ostrinia furnacalis, Hellula undalis,* and *Pediasia teterrellus;* Noctuidae such as *Spodoptera litura, Spodoptera exigua, Pseudaletia separata, Mamestra brassicae, Agrotis ipsilon, Plusia nigrisigna, Trichoplusia ni, Thoricoplusia spp., Heliothis spp.,* and Helicoverpa *spp.;* Pieridae such as *Pieris* rapae; Tortricidae such as *Adoxophyes spp., Grapholita molesta, Leguminivora glycinivorella, Matsumuraeses azukivora, Adoxophyes orana fasciata, Adoxophyes honmai., Homona magnanima, Archips fuscocupreanus,* and *Cydia pomonella;* Gracillariidae such as *Caloptilia theivora,* and *Phyllonorycter ringoneella;* Carposinidae such as *Carposina niponensis;* Lyonetiidae such as *Lyonetia spp.;* Lymantriidae such as *Lymantria spp.,* and *Euproctis spp.;* Yponomeutidae such as *Plutella* xylostella; Gelechiidae such as *Pectinophora gossapiella,* and *Phthorimaea operculella;* Arctiidae such as *Hyphantria cunea;* Tineidae such as *Tinea translucens,* and *Tineola bisselliella;* Tuta *absolute;* etc.

Thysanoptera:

Thripidae such as *Frankliniella occidentalis, Thrips parmi, Scirtothrips dorsalis, Thrips tabaci, Frankliniella intonsa, Frankliniella fusca, Thrips tabaci, Stenchaetothrips biformis,* and *Haplothrips aculeatus;* etc.

Diptera:

Agromyzidae such as *Hylemya antiqua, Hylemya platura, Agromyza oryzae, Hydrellia griseola, Chlorops oryzae,* and *Liriomyza trifolii; Dacus cucurbitae, Ceratitis capitata;* etc.

Coleoptera:

*Epilachna vigintioctopunctata, Aulacophora femoralis, Phyllotreta striolata, Oulema oryzae, Echinocnemus squameus, Lissorhoptrus oryzophilus, Anthonomus grandis, Callosobruchus chinensis, Sphenophorus venatus, Popillia japonica, Anomala cuprea, Diabrotica spp., Leptinotarsa decemlineata, Agriotes spp. ,* and *Lasioderma serricorne;* etc.

Orthoptera:

*Gryllotalpa africana, Oxya yezoensis, Oxya japonica;* etc.

Among the above harmful arthropods, preferred are Delphacidae, Deltocephalidae, Aphididae, Pentatomidae, *Lissorhoptrus oryzophilus, Oulema oryzae,* etc.
The harmful arthropod control composition of the present invention may be used for controlling plant diseases such as rice blast disease caused by *Magnaporthe grisea.*
The harmful arthropod control composition of the present invention can be applied to a plant or an area in which a plant is grown to control harmful arthropods therein. The plant as used herein include the stems and leaves of plants, the flowers of plants, the fruits of plants, the seeds of plants, etc.
The method for controlling a harmful arthropod of the present invention comprises applying an effective amount of the harmful arthropod control composition of the present invention to a plant or an area in which a plant is grown.
For example, the method for controlling a harmful arthropod of the present invention comprises the application of the harmful arthropod control composition of the present invention to the stems and leaves of plants such as foliage application, and the application of the harmful arthropod control composition to an area in which a plant is grown such as soil application and submerged application.
When the harmful arthropod control composition of the present invention is applied to a plant or an area in which a plant is grown, the application amount varies depending on the kinds of plant to be protected, the species or population size of harmful arthropod to be controlled, the form of a formulation, the timing of application, weather conditions, etc., but is generally within a range from 0.05 to 3,000 g, preferably from 0.5 to 300 g per 1,000 $m^2$ of an area where a plant is grown, in terms of the total amount of flonicamid, the present Delphacidae control compound and the present rice blast disease control compound.

The harmful arthropod control composition of the present invention in the form of an emulsifiable concentrate, a wettable powder or a suspension concentrate is generally applied after dilution with water. In this case, the total concentration of flonicamid, the present Delphacidae control compound and the present rice blast disease control compound after the dilution is generally from 0.00001 to 10% by weight, preferably from 0.0001 to 5% by weight.

The harmful arthropod control composition of the present invention in the form of a dust or a granule is generally applied as it is without dilution.

Examples of the application of the harmful arthropod control composition of the present invention to the stems and leaves of plants include foliage application, spraying by using helicopters, aerial application, etc.

Examples of the application of the harmful arthropod control composition of the present invention to an area in which a plant is grown include planting hole treatment, plant foot treatment, planting furrow treatment, planting row treatment, planting row treatment at sowing, broadcast application, side row treatment, water surface treatment, ridge surface treatment, inter-plant treatment, soil drenching, drenching at a seedling raising stage, chemical injection application, chemical drip irrigation, chemigation, nursery box treatment (nursery box spraying, nursery box soil drenching, nursery box chemical liquid flooding), nursery bed treatment (nursery bed spraying, nursery bed drenching, lowland nursery bed spraying, seedling immersion), bed soil incorporation (mixing with bed soil, mixing with bed soil before sowing, spraying before sowing and soil covering, spraying after sowing and soil covering, mixing with cover soil), mixing with culture soil, and mixing with a paste fertilizer, preferebly nursery box treatment (nursery box spraying, nursery box soil drenching, nursery box chemical liquid flooding), nursery bed treatment (nursery bed spraying, nursery bed drenching, lowland nursery bed spraying, seedling immersion), bed soil incorporation (mixing with bed soil, mixing with bed soil before sowing, spraying before sowing and soil covering, spraying after sowing and soil covering, mixing with cover soil), mixing with culture soil, mixing with a paste fertilizer, and spraying on water.

Examples of the plant to which the harmful arthropod control composition of the present invention can be applied include as described below:

Crops: corn, rice, wheat, barley, rye, oat, sorghum, cotton, soybean, peanut, buckwheat, sugar beet, rapeseed, sunflower, sugar cane, tobacco, etc.;

Vegetables: Solanaceae vegetables (eggplant, tomato, green pepper, hot pepper, potato, etc.), Cucurbitaceae vegetables (cucumber, pumpkin, zucchini, watermelon, melon, etc.), cruciferae vegetables (Japanese radish, turnip, horseradish, kohlrabi, Chinese cabbage, cabbage, brown mustard, broccoli, cauliflower, rape, etc.), Compositae vegetables (burdock, garland chrysanthemum, artichoke, lettuce, etc.), Liliaceae vegetables (Welsh onion, onion, garlic, asparagus, etc.), Umbelliferae vegetables (carrot, parsley, celery, parsnip, etc.), Chenopodiaceae vegetables (spinach, Swiss chard, etc.), Labiatae vegetables (Japanese basil, mint, basil, etc.), strawberry, sweat potato, yam, aroid, etc.;

Fruit trees: pomaceous fruits (apple, common pear, Japanese pear, Chinese quince, quince, etc.), stone fleshy fruits (peach, plum, nectarine, Japanese plum, cherry, apricot, prune, etc.), citrus plants (Satsuma mandarin, orange, lemon, lime, grapefruit, etc.), nuts (chestnut, walnut, hazel nut, almond, pistachio, cashew nut, macadamia nut, etc.), berry fruits (blueberry, cranberry, blackberry, raspberry, etc.), grape, persimmon, olive, loquat, banana, coffee, date, coconut, oil palm, etc.;

Trees other than fruit trees: tea, mulberry, flowering trees (azalea, camellia, hydrangea, sasanqua, Japanese star anise, cherry, tulip tree, crape myrtle, orange osmanthus, etc.), street trees (ash tree, birch, dogwood, eucalyptus, ginkgo, lilac, maple tree, oak, poplar, cercis, Chinese sweet gum, plane tree, zelkova, Japanese arborvitae, fir tree, Japanese hemlock, needle juniper, pine, spruce, yew, elm, horse chestnut, etc.), coral tree, podocarpus, cedar, Japanese cypress, croton, *Euonymus japonicus, Photinia glabra,* etc.;

Lawns; Zoysia (zoysiagrass, *Zoysia matrella,* etc.), Bermuda grasses *(Cynodon dactylon,* etc.), bent grasses (*Agrostis* alba, creeping bent grass, hiland bent, etc.), blueglasses (meadow grass, bird grass, etc.), fescue (tall fescue, chewings fescue, creeping red fescue, etc.), ryegrasses (darnel, rye grass, etc.), orchard grass, timothy grass, etc.;

Others: flowers (rose, carnation, chrysanthemum, prairie gentian, gypsophila, gerbera, marigold, salvia, petunia, verbena, tulip, aster, gentian, lily, pansy, cyclamen, orchid, convallaria, lavender, stock, ornamental cabbage, primula, poinsettia, gladiolus, cattleya, daisy, cymbidium, begonia, etc.), bio-fuel plants (Jatropha, safflower, camelina, switchgrass, Miscanthus, reed canary grass, giant reed, kenaf, cassava, willow, etc.), ornamental plants, etc.

Among the above plants, preferred are corn, wheat, rice, etc., and particulary preferred is rice.

The "plant" as used herein may be those having resistance, which is imparted by a genetic modification technology or a conventional breeding method.

The method for controlling a harmful arthropod of the present invention can be carried out in agricultural lands such as fields, paddy fields, dry fields, lawns, and orchards or nonagricultural lands.

The area in which a plant is grown is perferably an area in which rice is grown.

When the method for controlling a harmful arthropod of the present invention is used in the plant or the area in which a plant is grown, the timing of application is not particulary limited, but may vary depending on the plant or the area to be applied and the like. For example, when the method for controlling a harmful arthropod of the present invention is used in rice or an area in which rice is grown, the timing of application is as follows.

When the method for controlling a harmful arthropod of the present invention is used in rice or an area in which rice is grown, the application can be done, for example, before, during or after sowing or transplanting of rice. The timing of application may vary depending on the growing conditions of rice, the degree of occurrence of diseases, pests and weeds, weather conditions, etc., but is generally within a range from 30 days before sowing of rice to 20 days after transplanting of rice, preferably during sowing to before transplanting, more preferably 3 days before transplanting to before transplanting.

When the harmful arthropod control composition of the present invention is applied to a nursery box for rice seedling, the application amount is generally within a range from 0.1 to 35 g, preferably from 0.2 to 20 g, more preferebly 0.4 to 15 g per one nursery box for rice seedling (width: about 60 cm, length: about 30 cm), in terms of the total amount of flonicamid, the present Delphacidae control compound and the present rice blast disease control compound.

The application amount of the harmful arthropod control composition of the present invention per 1,000 $m^2$ of an area where rice is grown is generally within a range from 2 to 700 g, preferably from 4 to 400 g, more preferebly from 8 to 300 g per 1,000 $m^2$ of an area where rice is grown after transplantation, in terms of the total amount of flonicamid, the present Delphacidae control compound and the present rice blast disease control compound.

Examples

Hereinafter, the present invention will be described in more detail with reference to Formulation Examples and Test Examples, but not limited thereto. In the Examples, the term "part(s)" means part(s) by weight unless otherwise specified.

Firstly, Formulation Examples will be shown below.

Formulation Example 1 (Granules)

Two (2) parts of flonicamid, 1.5 parts of clothianidin, 2 parts of isotianil, 1 part of synthetic hydrated silicon oxide, 2 parts of calcium lignosulfonate, 30 parts of bentonite and 61.5 parts of kaolin clay are finely-ground and mixed, and then water is added thereto. The resultant mixture is sufficiently kneaded and then dried while grinding to obtain granules.

Formulation Example 2

Two (2) parts of flonicamid, 1.5 parts of clothianidin, 10 parts of probenazole, 1 part of synthetic hydrated silicon oxide, 2 parts of calcium lignosulfonate, 30 parts of bentonite and 53.5 parts of kaolin clay are finely-ground and mixed, and then water is added thereto. The resultant mixture is sufficiently kneaded and then dried while grinding to obtain granules.

Formulation Example 3

Two (2) parts of flonicamid, 1.5 parts of clothianidin, 12 parts of tiadinil, 1 part of synthetic hydrated silicon oxide, 2 parts of calcium lignosulfonate, 30 parts of bentonite and 51.5 parts of kaolin clay are finely-ground and mixed, and then water is added thereto. The resultant mixture is sufficiently kneaded and then dried while grinding to obtain granules.

Formulation Example 4

Two (2) parts of flonicamid, 1,5 parts of clothianidin, 4 parts of tricyclazole, 1 part of synthetic hydrated silicon oxide, 2 parts of calcium lignosulfonate, 30 parts of bentonite and 59.5 parts of kaolin clay are finely-ground and mixed, and then water is added thereto. The resultant mixture is sufficiently kneaded and then dried while grinding to obtain granules.

Formulation Example 5

Two (2) parts of flonicamid, 1.5 parts of clothianidin, 12 parts of pyroquilone, 1 part of synthetic hydrated silicon oxide, 2 parts of calcium lignosulfonate, 30 parts of bentonite and 51.5 parts of kaolin clay are finely-ground and mixed, and then water is added thereto. The resultant mixture is sufficiently kneaded and then dried while grinding to obtain granules.

Formulation Example 6

Two (2) parts of flonicamid, 1.5 parts of clothianidin, 10 parts of thiophanate-methyl, 1 part of synthetic hydrated silicon oxide, 2 parts of calcium lignosulfonate, 30 parts of bentonite and 53.5 parts of kaolin clay are finely-ground and mixed, and then water is added thereto. The resultant mixture is sufficiently kneaded and then dried while grinding to obtain granules.

Formulation Example 7

Two (2) parts of flonicamid, 1-5 parts of clothianidin, 7 parts of orysastrobin, 1 part of synthetic hydrated silicon oxide, 2 parts of calcium lignosulfonate, 30 parts of bentonite and 56.5 parts of kaolin clay are finely-ground and mixed, and then water is added thereto. The resultant mixture is sufficiently kneaded and then dried while grinding to obtain granules.

Formulation Example 8

Two (2) parts of flonicamid, 1.5 parts of clothianidin, 6 parts of azoxystrobin, 1 part of synthetic hydrated silicon oxide, 2 parts of calcium lignosulfonate, 30 parts of bentonite and 57.5 parts of kaolin clay are finely-ground and mixed, and then water is added thereto. The resultant mixture is sufficiently kneaded and then dried while grinding to obtain granules.

Formulation Example 9

Two (2) parts of flonicamid, 2 parts of imidacloprid, 2 parts of isotianil, 1 part of synthetic hydrated silicon oxide, 2 parts of calcium lignosulfonate, 30 parts of bentonite and 61 parts of kaolin clay are finely-ground and mixed, and then water is added thereto. The resultant mixture is sufficiently kneaded and then dried while grinding to obtain granules.

Formulation Example 10

Two (2) parts of flonicamid, 2 parts of imidacloprid, 10 parts of probenazole 1 part of synthetic hydrated silicon oxide, 2 parts of calcium lignosulfonate, 30 parts of bentonite and 53 parts of kaolin clay are finely-ground and mixed, and then water is added thereto. The resultant mixture is sufficiently kneaded and then dried while grinding to obtain granules.

Formulation Example 11

Two (2) parts of flonicamid, 2 parts of imidacloprid, 12 parts of tiadinil, 1 part of synthetic hydrated silicon oxide, 2 parts of calcium lignosulfonate, 30 parts of bentonite and 51 parts of kaolin clay are finely-ground and mixed, and then water is added thereto. The resultant mixture is sufficiently kneaded and then dried while grinding to obtain granules.

Formulation Example 12

Two (2) parts of flonicamid, 2 parts of imidacloprid, 4 parts of tricyclazole, 1 part of synthetic hydrated silicon oxide, 2 parts of calcium lignosulfonate, 30 parts of bentonite and 59 parts of kaolin clay are finely-ground and mixed, and then water is added thereto. The resultant mixture is sufficiently kneaded and then dried while grinding to obtain granules.

Formulation Example 13

Two (2) parts of flonicamid, 2 parts of imidacloprid, 12 parts of pyroquilone, 1 part of synthetic hydrated silicon oxide, 2 parts of calcium lignosulfonate, 30 parts of bentonite and 51 parts of kaolin clay are finely-ground and mixed, and then water is added thereto. The resultant mixture is sufficiently kneaded and then dried while grinding to obtain granules.

Formulation Example 14

Two (2) parts of flonicamid, 2 parts of imidacloprid, 10 parts of thiophanate-methyl, 1 part of synthetic hydrated silicon oxide, 2 parts of calcium lignosulfonate, 30 parts of bentonite and 53 parts of kaolin clay are finely-ground and mixed, and then water is added thereto. The resultant mixture is sufficiently kneaded and then dried while grinding to obtain granules.

Formulation Example 15

Two (2) parts of flonicamid, 2 parts of imidacloprid, 7 parts of orysastrobin, 1 part of synthetic hydrated silicon oxide, 2 parts of calcium lignosulfonate, 30 parts of bentonite and 56 parts of kaolin clay are finely-ground and mixed, and then water is added thereto. The resultant mixture is sufficiently kneaded and then dried while grinding to obtain granules.

Formulation Example 16

Two (2) parts of flonicamid, 2 parts of imidacloprid, 6 parts of azoxystrobin, 1 part of synthetic hydrated silicon oxide, 2 parts of calcium lignosulfonate, 30 parts of bentonite and 57 parts of kaolin clay are finely-ground and mixed, and then water is added thereto. The resultant mixture is sufficiently kneaded and then dried while grinding to obtain granules.

Formulation Example 17

Two (2) parts of flonicamid, 2 parts of dinotefuran, 2 parts of isotianil, 1 part of synthetic hydrated silicon oxide, 2 parts of calcium lignosulfonate, 30 parts of bentonite and 61 parts of kaolin clay are finely-ground and mixed, and then water is added thereto. The resultant mixture is sufficiently kneaded and then dried while grinding to obtain granules.

Formulation Example 18

Two (2) parts of flonicamid, 2 parts of dinotefuran, 10 parts of probenazole, 1 part of synthetic hydrated silicon oxide, 2 parts of calcium lignosulfonate, 30 parts of bentonite and 53 parts of kaolin clay are finely-ground and mixed, and then water is added thereto. The resultant mixture is sufficiently kneaded and then dried while grinding to obtain granules.

Formulation Example 19

Two (2) parts of flonicamid, 2 parts of dinotefuran, 12 parts of tiadinil, 1 part of synthetic hydrated silicon oxide, 2 parts of calcium lignosulfonate, 30 parts of bentonite and 51 parts of kaolin clay are finely-ground and mixed, and then water is added thereto. The resultant mixture is sufficiently kneaded and then dried while grinding to obtain granules.

Formulation Example 20

Two (2) parts of flonicamid, 2 parts of dinotefuran, 4 parts of tricyclazole, 1 part of synthetic hydrated silicon oxide, 2 parts of calcium lignosulfonate, 30 parts of bentonite and 59 parts of kaolin clay are finely-ground and mixed, and then water is added thereto. The resultant mixture is sufficiently kneaded and then dried while grinding to obtain granules.

Formulation Example 21

Two (2) parts of flonicamid, 2 parts of dinotefuran, 12 parts of pyroquilone, 1 part of synthetic hydrated silicon oxide, 2 parts of calcium lignosulfonate, 30 parts of bentonite and 51 parts of kaolin clay are finely-ground and mixed, and then water is added thereto. The resultant mixture is sufficiently kneaded and then dried while grinding to obtain granules.

Formulation Example 22

Two (2) parts of flonicamid, 2 parts of dinotefuran, 10 parts of thiophanate-methyl, 1 part of synthetic hydrated silicon oxide, 2 parts of calcium lignosulfonate, 30 parts of bentonite and 53 parts of kaolin clay are finely-ground and mixed, and then water is added thereto. The resultant mixture is sufficiently kneaded and then dried while grinding to obtain granules.

Formulation Example 23

Two (2) parts of flonicamid, 2 parts of dinotefuran, 7 parts of orysastrobin, 1 part of synthetic hydrated silicon oxide, 2 parts of calcium lignosulfonate, 30 parts of bentonite and 56 parts of kaolin clay are finely-ground and mixed, and then water is added thereto. The resultant mixture is sufficiently kneaded and then dried while grinding to obtain granules.

Formulation Example 24

Two (2) parts of flonicamid, 2 parts of dinotefuran, 6 parts of azoxystrobin, 1 part of synthetic hydrated silicon oxide, 2 parts of calcium lignosulfonate, 30 parts of bentonite and 57 parts of kaolin clay are finely-ground and mixed, and then water is added thereto. The resultant mixture is sufficiently kneaded and then dried while grinding to obtain granules.

Formulation Example 25

Two (2) parts of flonicamid, 2 parts of thiamethoxam, 2 parts of isotianil, 1 part of synthetic hydrated silicon oxide, 2 parts of calcium lignosulfonate, 30 parts of bentonite and 61 parts of kaolin clay are finely-ground and mixed, and then water is added thereto. The resultant mixture is sufficiently kneaded and then dried while grinding to obtain granules.

Formulation Example 26

Two (2) parts of flonicamid, 2 parts of thiamethoxam, 10 parts of probenazole, 1 part of synthetic hydrated silicon oxide, 2 parts of calcium lignosulfonate, 30 parts of bentonite and 53 parts of kaolin clay are finely-ground and mixed, and then water is added thereto. The resultant mixture is sufficiently kneaded and then dried while grinding to obtain granules.

Formulation Example 27

Two (2) parts of flonicamid, 2 parts of thiamethoxam, 12 parts of tiadinil, 1 part of synthetic hydrated silicon oxide, 2 parts of calcium lignosulfonate, 30 parts of bentonite and 51 parts of kaolin clay are finely-ground and mixed, and then water is added thereto. The resultant mixture is sufficiently kneaded and then dried while grinding to obtain granules.

Formulation Example 28

Two (2) parts of flonicamid, 2 parts of thiamethoxam, 4 parts of tricyclazole, 1 part of synthetic hydrated silicon oxide, 2 parts of calcium lignosulfonate, 30 parts of bentonite and 59 parts of kaolin clay are finely-ground and mixed, and then water is added thereto. The resultant mixture is sufficiently kneaded and then dried while grinding to obtain granules.

Formulation Example 29

Two (2) parts of flonicamid, 2 parts of thiamethoxam, 12 parts of pyroquilone, 1 part of synthetic hydrated silicon oxide, 2 parts of calcium lignosulfonate, 30 parts of bentonite and 51 parts of kaolin clay are finely-ground and mixed, and then water is added thereto. The resultant mixture is sufficiently kneaded and then dried while grinding to obtain granules.

Formulation Example 30

Two (2) parts of flonicamid, 2 parts of thiamethoxam, 10 parts of thiophanate-methyl, 1 part of synthetic hydrated silicon oxide, 2 parts of calcium lignosulfonate, 30 parts of bentonite and 53 parts of kaolin clay are finely-ground and mixed, and then water is added thereto. The resultant mixture is sufficiently kneaded and then dried while grinding to obtain granules.

Formulation Example 31

Two (2) parts of flonicamid, 2 parts of thiamethoxam, 7 parts of orysastrobin, 1 part of synthetic hydrated silicon oxide, 2 parts of calcium lignosulfonate, 30 parts of bentonite and 56 parts of kaolin clay are finely-ground and mixed, and then water is added thereto. The resultant mixture is sufficiently kneaded and then dried while grinding to obtain granules.

Formulation Example 32

Two (2) parts of flonicamid, 2 parts of thiamethoxam, 6 parts of azoxystrobin, 1 part of synthetic hydrated silicon oxide, 2 parts of calcium lignosulfonate, 30 parts of bentonite and 57 parts of kaolin clay are finely-ground and mixed, and then water is added thereto. The resultant mixture is sufficiently kneaded and then dried while grinding to obtain granules.

Formulation Example 33

Two (2) parts of flonicamid, 1 part of fipronil, 2 parts of isotianil, 1 part of synthetic hydrated silicon oxide, 2 parts of calcium lignosulfonate, 30 parts of bentonite and 62 parts of kaolin clay are finely-ground and mixed, and then water is added thereto. The resultant mixture is sufficiently kneaded and then dried while grinding to obtain granules.

Formulation Example 34

Two (2) parts of flonicamid, 1 part of fipronil, 10 parts of probenazole, 1 part of synthetic hydrated silicon oxide, 2 parts of calcium lignosulfonate, 30 parts of bentonite and 54 parts of kaolin clay are finely-ground and mixed, and then water is added thereto. The resultant mixture is sufficiently kneaded and then dried while grinding to obtain granules.

Formulation Example 35

Two (2) parts of flonicamid, 1 part of fipronil, 12 parts of tiadinil, 1 part of synthetic hydrated silicon oxide, 2 parts of calcium lignosulfonate, 30 parts of bentonite and 52 parts of kaolin clay are finely-ground and mixed, and then water is added thereto. The resultant mixture is sufficiently kneaded and then dried while grinding to obtain granules.

Formulation Example 36

Two (2) parts of flonicamid, 1 part of fipronil, 4 parts of tricyclazole, 1 part of synthetic hydrated silicon oxide, 2 parts of calcium lignosulfonate, 30 parts of bentonite and 60 parts of kaolin clay are finely-ground and mixed, and then water is added thereto. The resultant mixture is sufficiently kneaded and then dried while grinding to obtain granules.

Formulation Example 37

Two (2) parts of flonicamid, 1 part of fipronil, 12 parts of pyroquilone, 1 part of synthetic hydrated silicon oxide, 2 parts of calcium lignosulfonate, 30 parts of bentonite and 52 parts of kaolin clay are finely-ground and mixed, and then water is added thereto. The resultant mixture is sufficiently kneaded and then dried while grinding to obtain granules.

Formulation Example 38

Two (2) parts of flonicamid, 1 part of fipronil, 10 parts of thiophanate-methyl, 1 part of synthetic hydrated silicon oxide, 2 parts of calcium lignosulfonate, 30 parts of bentonite and 54 parts of kaolin clay are finely-ground and mixed, and then water is added thereto. The resultant mixture is sufficiently kneaded and then dried while grinding to obtain granules.

Formulation Example 39

Two (2) parts of flonicamid, 1 part of fipronil, 7 parts of orysastrobin, 1 part of synthetic hydrated silicon oxide, 2 parts of calcium lignosulfonate, 30 parts of bentonite and 57 parts of kaolin clay are finely-ground and mixed, and then water is added thereto. The resultant mixture is sufficiently kneaded and then dried while grinding to obtain granules.

Formulation Example 40

Two (2) parts of flonicamid, 1 part of fipronil, 6 parts of azoxystrobin, 1 part of synthetic hydrated silicon oxide, 2 parts of calcium lignosulfonate, 30 parts of bentonite and 58 parts of kaolin clay are finely-ground and mixed, and then water is added thereto. The resultant mixture is sufficiently kneaded and then dried while grinding to obtain granules.

Formulation Example 41

Two (2) parts of flonicamid, 3 parts of pymetrozine, 2 parts of isotianil, 1 part of synthetic hydrated silicon oxide, 2 parts of calcium lignosulfonate, 30 parts of bentonite and 60 parts of kaolin clay are finely-ground and mixed, and then water is added thereto. The resultant mixture is sufficiently kneaded and then dried while grinding to obtain granules.

Formulation Example 42

Two (2) parts of flonicamid, 3 parts of pymetrozine, 10 parts of probenazole, 1 part of synthetic hydrated silicon oxide, 2 parts of calcium lignosulfonate, 30 parts of bentonite and 52 parts of kaolin clay are finely-ground and mixed, and then water is added thereto. The resultant mixture is sufficiently kneaded and then dried while grinding to obtain granules.

Formulation Example 43

Two (2) parts of flonicamid, 3 parts of pymetrozine, 12 parts of tiadinil, 1 part of synthetic hydrated silicon oxide, 2 parts of calcium lignosulfonate, 30 parts of bentonite and 50 parts of kaolin clay are finely-ground and mixed, and then water is added thereto. The resultant mixture is sufficiently kneaded and then dried while grinding to obtain granules.

Formulation Example 44

Two (2) parts of flonicamid, 3 parts of pymetrozine, 4 parts of tricyclazole, 1 part of synthetic hydrated silicon oxide, 2 parts of calcium lignosulfonate,30 parts of bentonite and 58 parts of kaolin clay are finely-ground and mixed, and then water is added thereto. The resultant mixture is sufficiently kneaded and then dried while grinding to obtain granules.

Formulation Example 45

Two (2) parts of flonicamid, 3 parts of pymetrozine, 12 parts of pyroquilone, 1 part of synthetic hydrated silicon oxide, 2 parts of calcium lignosulfonate, 30 parts of bentonite and 50 parts of kaolin clay are finely-ground and mixed, and then water is added thereto. The resultant mixture is sufficiently kneaded and then dried while grinding to obtain granules.

Formulation Example 46

Two (2) parts of flonicamid, 3 parts of pymetrozine, 10 parts of thiophanate-methyl, 1 part of synthetic hydrated silicon oxide, 2 parts of calcium lignosulfonate, 30 parts of bentonite and 52 parts of kaolin clay are finely-ground and mixed, and then water is added thereto. The resultant mixture is sufficiently kneaded and then dried while grinding to obtain granules.

Formulation Example 47

Two (2) parts of flonicamid, 3 parts of pymetrozine, 7 parts of orysastrobin, 1 part of synthetic hydrated silicon oxide, 2 parts of calcium lignosulfonate, 30 parts of bentonite and 55 parts of kaolin clay are finely-ground and mixed, and then water is added thereto. The resultant mixture is sufficiently kneaded and then dried while grinding to obtain granules.

Formulation Example 48

Two (2) parts of flonicamid, 3 parts of pymetrozine, 6 parts of azoxystrobin, 1 part of synthetic hydrated silicon oxide, 2 parts of calcium lignosulfonate, 30 parts of bentonite and 56 parts of kaolin clay are finely-ground and mixed, and then water is added thereto. The resultant mixture is sufficiently kneaded and then dried while grinding to obtain granules.

Formulation Example 49

Ten (10) parts of flonicamid, 10 parts of clothianidin and 4 parts of isotianil, are added to a mixture of 4 parts of sodium lauryl sulfate, 2 parts of calcium lignosulfonate, 20 parts of a fine powder of synthetic hydrated silicon oxide and 50 parts of diatomaceous earth, and then the resultant mixture is sufficiently mixed with stirring to obtain a wettable powder.

Formulation Example 50

Ten (10) parts of flonicamid, 10 parts of clothianidin and 20 parts of probenazole are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 51

Ten (10) parts of flonicamid, 10 parts of clothianidin and 20 parts of tiadinil are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 52

Ten (10) parts of flanicamid, 10 parts of clothianidin and 8 parts of tricyclazole are added to a mixture of 4 parts of sodium lauryl sulfate, 2 parts of calcium lignosulfonate, 20 parts of a fine powder of synthetic hydrated silicon oxide and 46 parts of diatomaceous earth, and then the resultant mixture is sufficiently mixed with stirring to obtain a wettable powder.

Formulation Example 53

Ten (10) parts of flonicamid, 10 parts of clothianidin and 20 parts of pyroquilone are added to a mixture of 4 parts of sodium lauryl sulfate, 2 parts of calcium lignosulfonate,20 parts of a fine powder of synthetic hydrated silicon oxide and 34 parts of diatomaceous earth, and then the resultant mixture is sufficiently mixed with stirring to obtain a wettable powder.

Formulation Example 54

Ten (10) parts of flonicamid, 10 parts of clothianidin and 20 parts of thiophanate-methyl are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 55

Ten (10) parts of flonicamid, 10 parts of clothianidin and 10 parts of orysastrobin are added to a mixture of 4 parts of sodium lauryl sulfate, 2 parts of calcium lignosulfonate, 20 parts of a fine powder of synthetic hydrated silicon oxide and 44 parts of diatomaceous earth, and then the resultant mixture is sufficiently mixed with stirring to obtain a wettable powder.

Formulation Example 56

Ten (10) parts of flonicamid, 10 parts of clothianidin and 10 parts of azoxystrobin are added to a mixture of 4 parts of sodium lauryl sulfate, 2 parts of calcium lignosulfonate, 20 parts of a fine powder of synthetic hydrated silicon oxide and 44 parts of diatomaceous earth, and then the resultant mixture is sufficiently mixed with stirring to obtain a wettable powder.

Formulation Example 57

Ten (10) parts of flonicamid, 10 parts of imidacloprid and 4 parts of isotianil are added to a mixture of 4 parts of sodium lauryl sulfate, 2 parts of calcium lignosulfonate, 20 parts of a fine powder of synthetic hydrated silicon oxide and 50 parts of diatomaceous earth, and then the resultant mixture is sufficiently mixed with stirring to obtain a wettable powder.

Formulation Example 58

Ten (10) parts of flonicamid, 10 parts of imidacloprid and 20 parts of probenazole are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 59

Ten (10) parts of flonicamid, 10 parts of imidacloprid and 20 parts of tiadinil are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 60

Ten (10) parts of flonicamid, 10 parts of imidacloprid and 8 parts of tricyclazole are added to a mixture of 4 parts of sodium lauryl sulfate, 2 parts of calcium lignosulfonate, 20 parts of a fine powder of synthetic hydrated silicon oxide and 46 parts of diatomaceous earth, and then the resultant mixture is sufficiently mixed with stirring to obtain a wettable powder.

Formulation Example 61

Ten (10) parts of flonicamid, 1.0 parts of dinotefuran and 20 parts of probenazole are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 62

Ten (10) parts of flonicamid, 10 parts of dinotefuran and 20 parts of tiadinil are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 63

Ten (10) parts of flonicamid, 10 parts of dinotefuran and 10 parts of orysastrobin are added to a mixture of 4 parts of sodium lauryl sulfate, 2 parts of calcium lignosulfonate, 20 parts of a fine powder of synthetic hydrated silicon oxide and 44 parts of diatomaceous earth, and then the resultant mixture is sufficiently mixed with stirring to obtain a wettable powder.

Formulation Example 64

Ten (10) parts of flonicamid, 10 parts of thiamethoxam and 20 parts of pyroquilone are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 65

Ten (10) parts of flonicamid, 10 parts of fipronil and 20 parts of probenazole are added to a mixture of 4 parts of sodium lauryl sulfate, 2 parts of calcium lignosulfonate, 20 parts of a fine powder of synthetic hydrated silicon oxide and 34 parts of diatomaceous earth, and then the resultant mixture is sufficiently mixed with stirring to obtain a wettable powder.

Formulation Example 66

Ten (10) parts of flonicamid, 10 parts of fipronil, and 10 parts of orysastrobin are added to a mixture of 4 parts of sodium lauryl sulfate, 2 parts of calcium lignosulfonate, 20 parts of a fine powder of synthetic hydrated silicon oxide and 44 parts of diatomaceous earth, and then the resultant mixture is sufficiently mixed with stirring to obtain a wettable powder.

Formulation Example 67

One (1) part of flonicamid, 0.2 parts of clothianidin, 1 part of isotianil, 87.8 parts of kaolin clay and 10 parts of talc are finely-ground and mixed to obtain dusts.

Formulation Example 68

One (1) part of flonicamid, 0.2 parts of clothianidin, 2 parts of probenazole, 86.8 parts of kaolin clay and 10 parts of talc are finely-ground and mixed to obtain dusts.

Formulation Example 69

One (1) part of flonicamid, 0.2 parts of clothianidin, 2 parts of tiadinil, 86.8 parts of kaolin clay and 10 parts of talc are finely-ground and mixed to obtain dusts.

Formulation Example 70

One (1) part of flonicamid, 0.2 parts of clothianidin, 0.5 parts of tricyclazole, 87.8 parts of kaolin clay and 10 parts of talc are finely-ground and mixed to obtain dusts.

Formulation Example 71

One (1) part of flonicamid, 0.2 parts of clothianidin, 2 parts of pyroquilone, 86.8 parts of kaolin clay and 10 parts of talc are finely-ground and mixed to obtain dusts.

Formulation Example 72

One (1) part of flonicamid, 0.2 parts of clothianidin, 2 parts of thiophanate-methyl, 86.8 parts of kaolin clay and 10 parts of talc are finely-ground and mixed to obtain dusts.

Formulation Example 73

One (1) part of flonicamid, 0.2 parts of clothianidin, 1 part of orysastrobin, 87.8 parts of kaolin clay and 10 parts of talc are finely-ground and mixed to obtain dusts.

Formulation Example 74

One (1) part of flonicamid, 0.2 parts of clothianidin, 0.5 parts of azoxystrobin, 87.8 parts of kaolin clay and 10 parts of talc are finely-ground and mixed to obtain dusts.

Formulation Example 75

One (1) part of flonicamid, 0.25 parts of imidacloprid, 1 part of isotianil, 87.75 parts of kaolin clay and 10 parts of talc are finely-ground and mixed to obtain dusts.

Formulation Example 76

One (1) part of flonicamid, 0.25 parts of imidacloprid, 2 parts of probenazole, 86.75 parts of kaolin clay and 10 parts of talc are finely-ground and mixed to obtain dusts.

Formulation Example 77

One (1) part of flonicamid, 0.25 parts of imidacloprid, 2 parts of tiadinil, 86.75 parts of kaolin clay and 10 parts of talc are finely-ground and mixed to obtain dusts.

Formulation Example 78

One (1) part of flonicamid, 0.25 parts of imidacloprid, 0.5 parts of tricyclazole, 87.75 parts of kaolin clay and 10 parts of talc are finely-ground and mixed to obtain dusts.

Formulation Example 79

One (1) part of flonicamid, 0.35 parts of dinotefuran, 2 parts of probenazole, 86.65 parts of kaolin clay and 10 parts of talc are finely-ground and mixed to obtain dusts.

Formulation Example 80

One (1) part of flonicamid, 0.35 parts of dinotefuran, 2 parts of tiadinil, 86.65 parts of kaolin clay and 10 parts of talc are finely-ground and mixed to obtain dusts.

Formulation Example 81

One (1) part of flonicamid, 0.35 parts of dinotefuran, 1 part of orysastrobin, 87.65 parts of kaolin clay and 10 parts of talc are finely-ground and mixed to obtain dusts.

Formulation Example 82

One (1) part of flonicamid, 0.25 parts of thiamethoxam, 2 parts of pyroquilone, 86.75 parts of kaolin clay and 10 parts of talc are finely-ground and mixed to obtain dusts.

Formulation Example 83

A mixture of 6 parts of flonicamid, 3 parts of clothianidin, 10 parts of isotianil, 30 parts of white carbon containing 50 parts of ammonium polyoxyethylene alkylether sulfate (= a mixture of ammonium polyoxyethylene alkylether sulfate and white carbon in the weight ratio of 1:1, the same shall apply hereinafter) and 51 parts of water is finely-ground by a wet grinding method to obtain a suspension concentrate.

Formulation Example 84

A mixture of 6 parts of flonicamid, 3 parts of clothianidin, 10 parts of probenazole, 30 parts of white carbon containing 50 parts of ammonium polyoxyethylene alkylether sulfate and 51 parts of water is finely-ground by a wet grinding method to obtain a suspension concentrate.

Formulation Example 85

A mixture of 6 parts of flonicamid, 3 parts of clothianidin, 10 parts of tiadinil, 30 parts of white carbon containing 50 parts of ammonium polyoxyethylene alkylether sulfate and 51 parts of water is finely-ground by a wet grinding method to obtain a suspension concentrate.

Formulation Example 86

A mixture of 6 parts of flonicamid, 3 parts of clothianidin, 8 parts of tricyclazole, 30 parts of white carbon containing 50 parts of ammonium polyoxyethylene alkylether sulfate and 53 parts of water is finely-ground by a wet grinding method to obtain a suspension concentrate.

Formulation Example 87

A mixture of 6 parts of flonicamid, 3 parts of clothianidin, 10 parts of pyroquilone, 30 parts of white carbon containing 50 parts of ammonium polyoxyethylene alkylether sulfate and 51 parts of water is finely-ground by a wet grinding method to obtain a suspension concentrate.

Formulation Example 88

A mixture of 6 parts of flonicamid, 3 parts of clothianidin, 10 parts of thiophanate-methyl, 30 parts of white carbon containing 50 parts of ammonium polyoxyethylene alkylether sulfate and 51 parts of water is finely-ground by a wet grinding method to obtain a suspension concentrate.

Formulation Example 89

A mixture of 6 parts of flonicamid, 3 parts of clothianidin, 10 parts of orysastrobin, 30 parts of white carbon containing 50 parts of ammonium polyoxyethylene alkylether sulfate and 51 parts of water is finely-ground by a wet grinding method to obtain a suspension concentrate.

Formulation Example 90

A mixture of 6 parts of flonicamid, 3 parts of clothianidin, 8 parts of azoxystrobin, 30 parts of white carbon containing 50 parts of ammonium polyoxyethylene alkylether sulfate and 53 parts of water is finely-ground by a wet grinding method to obtain a suspension concentrate.

Formulation Example 91

A mixture of 6 parts of flonicamid, 4 parts of imidacloprid, 10 parts of isotianil, 30 parts of white carbon containing 50 parts of ammonium polyoxyethylene alkylether sulfate and 50 parts of water is finely-ground by a wet grinding method to obtain a suspension concentrate.

Formulation Example 92

A mixture of 6 parts of flonicamid, 4 parts of imidacloprid, 10 parts of probenazole, 30 parts of white carbon containing 50 parts of ammonium polyoxyethylene alkylether sulfate and 50 parts of water is finely-ground by a wet grinding method to obtain a suspension concentrate.

Formulation Example 93

A mixture of 6 parts of flonicamid, 4 parts of imidacloprid, 10 parts of tiadinil, 30 parts of white carbon containing 50 parts of ammonium polyoxyethylene alkylether sulfate and 50 parts of water is finely-ground by a wet grinding method to obtain a suspension concentrate.

Formulation Example 94

A mixture of 6 parts of flonicamid 4 parts of imidacloprid, 8 parts of tricyclazole, 30 parts of white carbon containing 50 parts of ammonium polyoxyethylene alkylether sulfate and 52 parts of water is finely-ground by a wet grinding method to obtain a suspension concentrate.

Formulation Example 95

A mixture of 6 parts of flonicamid, 4 parts of dinotefuran, 10 parts of probenazole, 30 parts of white carbon containing 50 parts of ammonium polyoxyethylene alkylether sulfate and 50 parts of water is finely-ground by a wet grinding method to obtain a suspension concentrate.

Formulation Example 96

A mixture of 6 parts of flonicamid, 4 parts of dinotefuran, 10 parts of tiadinil, 30 parts of white carbon containing 50 parts of ammonium polyoxyethylene alkylether sulfate and 50 parts of water is finely-ground by a wet grinding method to obtain a suspension concentrate.

Formulation Example 97

A mixture of 6 parts of flonicamid, 4 parts of dinotefuran, 10 parts of orysastrobin, 30 parts of white carbon containing 50 parts of ammonium polyoxyethylene alkylether sulfate and 50 parts of water is finely-ground by a wet grinding method to obtain a suspension concentrate.

Formulation Example 98

A mixture of 6 parts of flonicamid, 3 parts of thiamethoxam, 10 parts of pyroquilone, 30 parts of white carbon containing 50 parts of ammonium polyoxyethylene alkylether sulfate and 51 parts of water is finely-ground by a wet grinding method to obtain a suspension concentrate.

Formulation Example 99

A mixture of 6 parts of flonicamid, 4 parts of fipronil, 10 parts of probenazole, 30 parts of white carbon containing 50 parts of ammonium polyoxyethylene alkylether sulfate and 50 parts of water is finely-ground by a wet grinding method to obtain a suspension concentrate.

Formulation Example 100

A mixture of 6 parts of flonicamid, 4 parts of fipronil, 10 parts of orysastrobin, 30 parts of white carbon containing 50 parts of ammonium polyoxyethylene alkylether sulfate and 50 parts of water is finely-ground by a wet grinding method to obtain a suspension concentrate.

Next, the effects of the present invention will be demonstrated below with reference to Test Examples.

Test Example 1 (Test for Insecticidal Activity on *Nilaparvata lugens*)

Each of flonicamid, clothianidin, imidacloprid, dinotefuran, thiamethoxam, fipronil, isotianil, probenazole, tiadinil, tricyclazole, pyroquilone and orysastrobin was dissolved in acetone (manufactured by Wako Pure Chemical Industries, Ltd.) containing SORGEN TW-20 (manufactured by Dai-ichi Kogyo Seiyaku Co., Ltd.) and then diluted with water to a given concentration.

The water dilution of flonicamid, the water dilution of clothianidin, imidacloprid, dinotefuran, thiamethoxam or fipronil, and the water dilution of isotianil, probenazole, tiadinil, tricyclazole, pyroguilone or orysastrobin were mixed to prepare a test solution.

Each 0.6 ml of the test solutions was sprayed onto a soil in the vicinity of the foot of one rice seedling (*Oryza saliva,* cultivar: Hoshinoyume) at the 2.5 leaf stage grown in a paper pot. After standing for 2 hours, the seedling was transplanted to a flooded soil in 1/10,000a Wagner pot and then the pot was placed in a greenroom (23°C). One (1) day after the treatment, the foot of the seedling was covered by a plastic cup and 10 third-instar nymphs of *Nilaparvata lugens* were released thereto.

Five (5) days after releasing the tested nymphs, the insects were observed for life or death. From the observation results, an insect death rate was calculated by the following Equation 1) and a corrected insect death rate was calculated by the following Equation 2). For each treatment, there were 2 replicates. The average values are shown in Table 1.

$$\text{Equation 1); Insect death rate (\%) = (Number of tested insects - number of surviving insects)/Number of tested insects x 100}$$

Equation 2); Corrected insect death rate (%) = {(Insect death rate in treated section - Insect death rate in untreated section)/(100 - Insect death rate in untreated section)} x 100

Table 1

| Composition Number | Test Compounds | Application Amount [mg/seedling] | Corrected Insect Death Rate [%] |
|---|---|---|---|
| 1 | flonicamid<br>clothianidin<br>isotianil | 0.25<br>0.1875<br>0.25 | 100 |
| 2 | flonicamid,<br>imidacloprid<br>isotianil | 0.25<br>0.25<br>0.25 | 100 |
| 3 | flonicamid<br>imidacloprid<br>tricyclazole | 0.25<br>0.25<br>0.5 | 100 |
| 4 | flonicamid,<br>imidacloprid<br>probenazole | 0.25<br>0.25<br>1.25 | 100 |
| 5 | flonicamid<br>imidacloprid<br>tiadinil, | 0.25<br>0.25<br>1.5 | 100 |
| 6 | flonicamid<br>dinotefuran<br>probenazole | 0.25<br>0.25<br>1.25 | 100 |
| 7 | flonicamid<br>dinotefuran,<br>orysastrobin | 0.25<br>0.25<br>0.875 | 100 |
| 8 | flonicamid<br>dinotefuran,<br>tiadinil | 0.25<br>0.25<br>1.5 | 100 |
| 9 | flonicamid<br>thiamethoxam<br>pyroquilone | 0.25<br>0.25<br>1.5 | 100 |
| 10 | flonicamid,<br>fipronil<br>orysastrobin | 0.25<br>0.125<br>0.875 | 100 |
| 11 | flonicamid<br>fipronil,<br>probenazole | 0.25<br>0.125<br>1.25 | 100 |

Test Example 2 (Test for Insecticidal Activity on *Nilaparvata lugens*)

Each 10 mg of flonicamid, dinotefuran and azoxystrobin was dissolved in 1 ml of acetone (manufactured by wako Pure Chemical Industries, Ltd.) containing SORGEN TW-20 (manufactured by Dai-ichi Kogyo Seiyaku Co., Ltd.) and then diluted with water containing 0.02% by volume of a spreading agent [product name: Dain (registered trademark), manufactured by Sumitomo chemical garden products inc.] to a given concentration. The water dilution of flonicamid, the water dilution of dinotefuran and the water dilution of azoxystrobin were mixed to prepare a test solution.

Each the test solution was sprayed onto a rice seedling (*Oryza sativa*, cultivar: Hoshinoyume) at the 2.5 leaf stage grown in a paper pot in an amount of 10 ml per a seedling. This rice seedling was air-dried and then put into a glass test tube (diameter: 30 mm, height: 200 mm) with 4.8 ml of water. Into the test tube were released 10 second-instar nymphs of *Nilaparvata lugens,* and then the tube was placed in a room (25°C, humidity 55%).

Six (6) days after releasing the tested nymphs, the insects were observed for life or death. From the observation results, an insect death rate was calculated by the above Equation 1) and a corrected insect death rate was calculated by the above Equation 2). For each treatment, there were 2 replicates. The average values are shown in Table 2.

Table 2

| Composition Number | Test Compounds | Concentration [ppm] | Corrected Insect Death Rate [%] |
|---|---|---|---|
| 12 | flonicamid<br>dinotefuran<br>azoxystrobin | 20<br>10<br>10 | 100 |

Industrial Applicability

The harmful arthropod control composition of the present invention has an excellent controlling effect on harmful arthropods.

**Claims**

1. A harmful arthropod control composition comprising flonicamid, one or more Delphacidae control compounds selected from Group (A), and one or more rice blast disease control compounds selected from Group (B):

   Group (A): a group consisting of clothianidin, imidacloprid, dinotefuran, thiamethoxam,fipronil and pymetrozine.
   Group (B): a group consisting of isotianil, probenazole, tiadinil, tricyclazole, pyroquilone, thiophanate-methyl, orysastrobin and azoxystrobin.

2. The harmful arthropod control composition according to claim 1, wherein the weight ratio of flonicamid to the Delphacidae control compound is from 100:1 to 1:100.

3. The harmful arthropod control composition according to claim 2, wherein the weight ratio of flonicamid to the rice blast disease control compound is from 10:1 to 1:100.

4. A method for controlling a harmful arthropod, which comprises applying an effective amount of the harmful arthropod control composition according to any one of claims 1 to 3 to a plant or an area in which a plant is grown.

5. The method for controlling a harmful arthropod according to claim 4, wherein the plant or the area in which a plant is grown is rice or an area in which rice is grown.

<table>
<tr><td colspan="2" align="center">**INTERNATIONAL SEARCH REPORT**</td><td>International application No.</td></tr>
<tr><td colspan="2"></td><td>PCT/JP2011/068209</td></tr>
</table>

**A. CLASSIFICATION OF SUBJECT MATTER**
*A01N43/40*(2006.01)i, *A01N37/50*(2006.01)i, *A01N43/54*(2006.01)i,
*A01N43/707*(2006.01)i, *A01N43/80*(2006.01)i, *A01N43/828*(2006.01)i,
*A01N43/90*(2006.01)i, *A01N47/02*(2006.01)i, *A01N47/34*(2006.01)i,
According to International Patent Classification (IPC) or to both national classification and IPC

**B. FIELDS SEARCHED**

Minimum documentation searched (classification system followed by classification symbols)
A01N43/40, A01N37/50, A01N43/54, A01N43/707, A01N43/80, A01N43/828,
A01N43/90, A01N47/02, A01N47/34, A01N51/00, A01P7/00

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6-321903 A (Ishihara Sangyo Kaisha, Ltd.), 22 November 1994 (22.11.1994), claims 12, 14; paragraphs [0076] to [0119]; examples & US 5360806 A          & EP 580374 A1 & CN 1081670 A | 1-5 |
| A | JP 2008-525338 A (Bayer Cropscience AG.), 17 July 2008 (17.07.2008), claim 1; paragraph [0080] & US 2008/0274882 A1     & EP 1830651 A1 & WO 2006/069654 A2     & KR 10-2007-0093124 A & CN 101087531 A | 1-5 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 August, 2011 (30.08.11) | 13 September, 2011 (13.09.11) |

| Name and mailing address of the ISA/ Japanese Patent Office | Authorized officer |
|---|---|
| Facsimile No. | Telephone No. |

Form PCT/ISA/210 (second sheet) (July 2009)

20

**INTERNATIONAL SEARCH REPORT**

| International application No. |
| --- |
| PCT/JP2011/068209 |

C (Continuation).　DOCUMENTS CONSIDERED TO BE RELEVANT

| Category* | Citation of document, with indication, where appropriate, of the relevant passages | Relevant to claim No. |
| --- | --- | --- |
| A | JP 2010-159277 A　(Sumitomo Chemical Co., Ltd.), 22 July 2010 (22.07.2010), claims 1, 3; paragraphs [0015], [0030]; examples (Family: none) | 1-5 |

Form PCT/ISA/210 (continuation of second sheet) (July 2009)

| **INTERNATIONAL SEARCH REPORT** | International application No. |
|---|---|
| | PCT/JP2011/068209 |

Continuation of A. CLASSIFICATION OF SUBJECT MATTER
  (International Patent Classification (IPC))

A01N51/00(2006.01)i, A01P7/00(2006.01)i

        (According to International Patent Classification (IPC) or to both national
        classification and IPC)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2994182 B

- WO 99024413 A

**Non-patent literature cited in the description**

- The Pesticide Manual-15th. BCPC